# EUROPEAN PATENT APPLICATION

(11) **EP 4 249 158 A1**
(43) Date of publication of application: **27.09.2023**
(21) Application number: 22791672.3
(22) Date of filing: 14.04.2022
(51) Int. Cl.: B23K 11/00, B23K 11/11, C22C 38/00, C22C 38/04

(54) **FRAME MEMBER**

(30) Priority: 22.04.2021 JP 2021072691
(71) Applicant: NIPPON STEEL CORPORATION, Chiyoda-ku Tokyo 100-8071 (JP)
(72) Inventor: KATO, Ryoma, Tokyo 100-8071 (JP); AITOH, Takahiro, Tokyo 100-8071 (JP); FUJINAKA, Shingo, Tokyo 100-8071 (JP); TODA, Yuri, Tokyo 100-8071 (JP)
(74) Representative: Zimmermann & Partner Patentanwälte mbB
(86) International application number: PCT/JP2022/017788
(87) International publication number: WO 2022/224898

(57) **Abstract**

Provided is a frame member obtained by joining a first steel sheet member and a second steel sheet member at a spot-welding portion by spot welding. A cross-sectional region in which a cross section perpendicular to a longitudinal direction of the frame member is a closed cross section is formed, the first steel sheet member has a tensile strength of 1,900 MPa or more, and the spot-welding portion has a molten metal portion formed by the spot welding and a heat-affected portion adjacent to an outside of the molten metal portion. Average Vickers hardness Hv_{Ave} at a measurement position corresponding to the first region on the virtual straight line and minimum Vickers hardness Hv_{Min} at a measurement position corresponding to the third region on the virtual straight line satisfy Hv_{Ave} - Hv_{Min} ≤ 100.

## Description

### [Technical Field of the Invention]

The present invention relates to a frame member capable of exhibiting excellent energy absorption performance that matches high-strengthening by suppressing fracture from a spot-welding portion at the time of the collision.

Priority is claimed on Japanese Patent Application No. 2021-072691, filed on April 22, 2021, the content of which is incorporated herein by reference.

### [Related Art]

In the automobile industry, vehicle body structures capable of reducing the impact at the time of the collision have been developed. A frame member constructing a vehicle body structure is required to absorb collision energy, and adopts, for example, a structure obtained by forming a plurality of steel sheets into a predetermined shape by press forming or the like and by then forming a closed cross section by spot welding.

In such a structure, it is important to secure a strength so that even in a case where the member is deformed by an input at the time of the collision, the closed cross section of the member can be maintained without easy fracture of the spot-welding portion.

In general, the absorbed energy at the time of the collision per unit mass of the frame member can be increased by increasing the strength of the steel sheet. Therefore, increasing the strength of the steel sheet is often used as a method for reducing the weight of the automobile body.

Meanwhile, it has been known that the strength of the spot-welding portion is reduced with an increase in strength of the steel sheet. Accordingly, in a case where a closed cross section is formed by spot welding using a high-strength steel sheet, it is necessary to devise measures so that the spot-welding portion does not fracture when a collision input is applied to the member. This is because in a case where fracture occurs from the spot-welding portion, the closed cross section cannot be maintained, and the energy absorption performance that matches high-strengthening cannot be obtained.

Based on such actual situation, a frame member designed to obtain energy absorption performance that matches high-strengthening has been proposed.

For example, Patent Document 1 discloses an automobile frame member including a first steel sheet, a second steel sheet, and a first weld metal portion, in which minimum Vickers hardness of a region in the second steel sheet within 4 mm around the first weld metal portion is 80% or more of hardness of the second steel sheet outside the region.

### [Prior Art Document]

### [Patent Document]

[Patent Document 1] PCT International Publication No. WO2020/090916

### [Disclosure of the Invention]

### [Problems to be Solved by the Invention]

According to the technology of Patent Document 1, it is possible to achieve both an improvement in strength of the whole member including a welded portion and an improvement in impact absorption characteristics.

However, the problem to be solved by Patent Document 1 is related to suppression of a reduction in hardness due to HAZ softening, but the factors of a reduction in joint strength in a case where a steel sheet is increased in strength are not limited to hardness reduction due to HAZ softening. Even with the technology of Patent Document 1, depending on the steel to be used, desired energy absorption performance may not be exhibited due to fracture from the spot-welding portion, and there is room for further improvement of the energy absorption performance.

The present invention is contrived in view of the above problems, and an object of the present invention is to provide a frame member capable of exhibiting excellent energy absorption performance that matches high-strengthening by suppressing fracture at a spot-welding portion at the time of the collision.

### [Means for Solving the Problem]

In order to achieve the above object, the present invention adopts the following configurations.
(1) A first aspect of the present invention is a frame member obtained by joining a first steel sheet member and a second steel sheet member at a spot-welding portion by spot welding, in which a cross-sectional region in which a cross section perpendicular to a longitudinal direction of the frame member is a closed cross section is formed, the first steel sheet member has a tensile strength of 1,900 MPa or more, the spot-welding portion has a molten metal portion formed by the spot welding and a heat-affected portion adjacent to an outside of the molten metal portion, and in a cross section perpendicular to the longitudinal direction including a center point of the molten metal portion, in a case where a region corresponding to the molten metal portion is defined as a first region, a region corresponding to the heat-affected portion is defined as a second region, a region formed of a region from a boundary between the first region and the second region to a position 100 µm away from the boundary toward the first region and a region from the boundary to a position 100 µm away from the boundary toward the second region is defined as a third region, and Vickers hardness is measured at a pitch of 15 µm with a load of 10 gf along a virtual straight line extending from a center portion of the first region to the second region, average Vickers hardness Hv_{Ave} at a measurement position corresponding to the first region on the virtual straight line and minimum Vickers hardness Hv_{Min} at a measurement position corresponding to the third region on the virtual straight line satisfy Hv_{Ave} - Hv_{Min} ≤ 100.
(2) In the frame member according to (1), a cross-sectional region in which a ratio h1/w of a height h1 of the first steel sheet member along a sheet thickness direction of a part where the spot-welding portion is formed in the first steel sheet member in the cross section perpendicular to the longitudinal direction of the frame member to a width w of the frame member along a direction perpendicular to the sheet thickness direction of the part where the spot-welding portion is formed in the first steel sheet member is 0.6 or less may be formed.
(3) In the frame member according to (2), the cross-sectional region in which the ratio h1/w is 0.6 or less may exist in 50% or more of a total length of the frame member in the longitudinal direction.

### [Effects of the Invention]

According to the above aspect, in a case where the hardness distribution in the vicinity of the boundary between a molten metal and a HAZ portion is optimized, fracture at a spot-welding portion at the time of the collision can be suppressed, and excellent energy absorption performance that matches high-strengthening can be exhibited.

### [Brief Description of the Drawings]

FIG. 1 is a perspective view showing a frame member according to one embodiment of the present invention.
FIG. 2A is a schematic cross-sectional view showing the vicinity of a spot-welding portion of the frame member according to the embodiment.
FIG. 2B is a graph showing hardness distribution along a virtual straight line a in FIG. 2A.
FIG. 3A is a schematic cross-sectional view showing the vicinity of a spot-welding portion of a frame member using a steel sheet member having an Mn content of 1.27% by mass.
FIG. 3B is a graph showing hardness distribution along a virtual straight line a in FIG. 3A.
FIG. 4 is a schematic view for explaining a cross-sectional shape of a member used in examples.
FIG. 5 is a schematic view for explaining conditions of a three-point bending test in experimental examples.
FIG. 6A is a schematic view showing a state in which spot fracture has occurred in the three-point bending test, and shows a state in which spot fracture has occurred at five positions on one side.
FIG. 6B is a schematic view showing a state in which spot fracture has occurred in the three-point bending test, and shows a state in which spot fracture has occurred at one position on one side.

### [Embodiments of the Invention]

The inventors have intensively studied a configuration of a frame member capable of exhibiting excellent energy absorption performance that matches high-strengthening.

The inventors have analyzed spot fracture occurring in a case where a hot stamping material of more than 2.0 GPa is applied as a material of a frame member, and focused on the fact that even with the same strength, the frequency of occurrence of spot fracture varies with changes in Mn content.

In addition, the inventors have investigated in detail the hardness distribution in the vicinity of a spot-welding portion of a frame member, obtained by overlapping and spot-welding two hot stamping materials of more than 2.0 GPa. As a result, the inventors have found that in a frame member in which spot fracture is likely to occur, there is a tendency that separately from a HAZ-softened portion, a part where the hardness is 100 Hv or more lower than the average hardness of the molten metal exists in the vicinity of a boundary between a molten metal and a HAZ portion.

In addition, the inventors have conducted further studies focusing on the fact that this tendency is remarkable in a case where a steel sheet material having a high Mn content is used. As a result, the inventors have found that the above tendency is caused due to the existence of a Mn-deficient layer formed in the vicinity of the boundary between the molten metal and the HAZ portion.

Based on these findings, the inventors have found that in a case where the hardness distribution in the vicinity of the boundary between the molten metal and the HAZ portion is optimized, spot fracture can be suppressed even in a frame member in which a hot stamping material of more than 2.0 GPa is applied, and excellent energy absorption performance that matches high-strengthening can be exhibited, and completed the present invention.

Hereinafter, a frame member 1 according to one embodiment of the present invention will be described.

In the present specification and the drawings, constituent elements having substantially the same functional configuration are designated by the same reference numerals to avoid duplicating description.

First, terms and phrases in the present specification will be described.

The "longitudinal direction Z" means a material axis direction of a frame member, that is, a direction in which the axis extends. The "width direction X" is a direction in which a joint surface between two steel sheet members spot-welded extends among directions perpendicular to the longitudinal direction Z. The "height direction Y" is a direction perpendicular to the longitudinal direction Z and the width direction X.

The "molten metal portion" means a part where the overlapped steel sheet members are melted and integrated by spot welding heat. The molten metal portion may be referred to as a nugget.

The "heat-affected portion" is a part formed adjacent to the outside of the molten metal portion and having a structure different from that of a base metal portion due to the influence of spot welding heat. The heat-affected portion may be referred to as a heat affected zone (HAZ).

Usually, in an outer peripheral region in the heat-affected portion, a HAZ-softened portion which is more softened than the molten metal portion and the base metal portion due to the influence of spot welding heat exists.

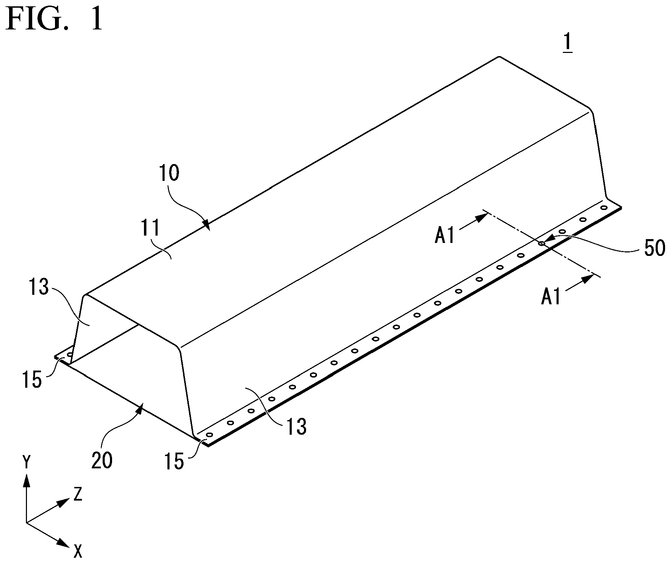

FIG. 1 is a perspective view of the frame member 1. The frame member 1 is a long member having a hollow tubular shape and extending along the longitudinal direction Z. The frame member 1 is configured by joining a first steel sheet member 10 and a second steel sheet member 20 by a plurality of spot-welding portions 50.

The first steel sheet member 10 is a member obtained by press-forming a steel sheet into a hat-shaped cross-sectional shape. The sheet thickness of the first steel sheet member 10 (that is, the sheet thickness of the steel sheet before press forming) may be 0.4 mm or more and 4.2 mm or less.

As shown in FIG. 1, the first steel sheet member 10 has a top sheet 11, a pair of side walls 13, 13, each of which is bent and extends from an end edge of the top sheet 11 in the width direction X, and a pair of flanges 15, 15, each of which is bent from an end edge on the opposite side to the top sheet 11 and extends outward in the width direction X in the pair of side walls 13, 13.

The first steel sheet member 10 has a tensile strength of 1,900 MPa or more. In a case where the first steel sheet member 10 has a tensile strength of 1,900 MPa or more, excellent energy absorption performance can be exhibited.

However, in a case where fracture occurs from the spot-welding portion 50 at the time of the impact deformation of the frame member 1 and the closed cross section collapses, the energy absorption performance due to the first steel sheet member 10 having a tensile strength of 1,900 MPa or more cannot be sufficiently exhibited. Accordingly, in the present application, as will be described later, it is important to suppress spot fracture while using a high-strength member by optimizing the hardness distribution in the vicinity of the spot-welding portion 50.

The first steel sheet member 10 can be manufactured by a method (hot stamping method) including heating a steel sheet to an austenite transformation temperature or higher and quenching the steel sheet while forming the steel sheet with a water cooling die.

The second steel sheet member 20 is a flat steel sheet. The sheet thickness of the second steel sheet member 20 may be 0.4 mm or more and 4.2 mm or less.

The tensile strength of the second steel sheet member 20 is not particularly limited. However, as in the case of the first steel sheet member 10, it is preferable that the tensile strength is 1,900 MPa or more since further excellent energy absorption performance can be exhibited.

The spot-welding portion 50 is formed by performing spot welding in a state in which the second steel sheet member 20 is overlapped on the pair of flanges 15, 15 of the first steel sheet member 10.

A plurality of the spot-welding portions 50 are formed at a pitch of about 15 mm to 50 mm along the longitudinal direction Z of the frame member 1.

The conditions of the spot welding are not particularly limited. For example, heat input conditions may be adopted so that the nugget diameter (that is, the diameter of the molten metal portion) is about 6\'L (t is a smaller one of the sheet thickness of the first steel sheet member 10 and the sheet thickness of the second steel sheet member 20).

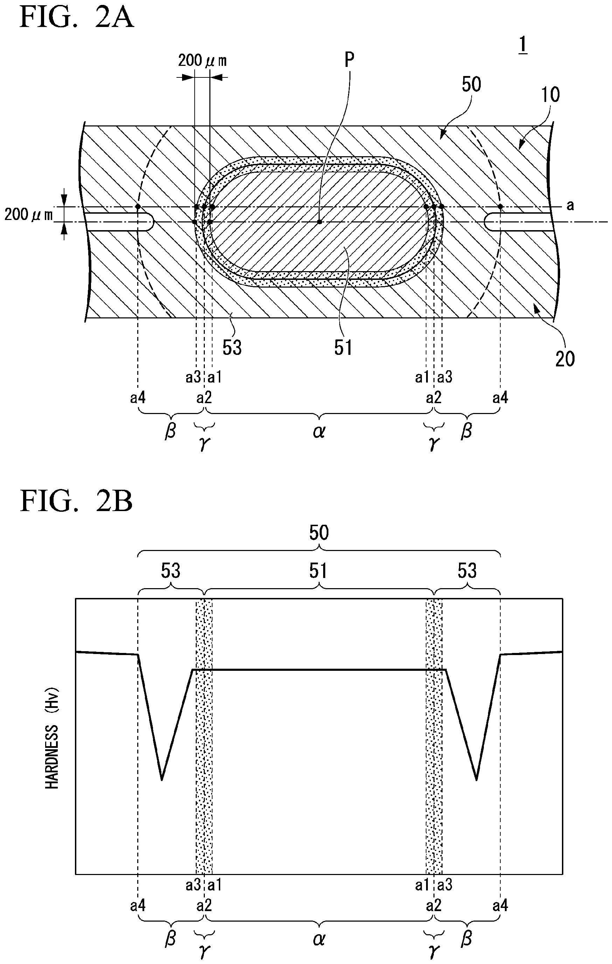

FIG. 2A is a schematic view of a cross section taken along the line A1-A1 of FIG. 1. In other words, FIG. 2A is a schematic view showing a cross section perpendicular to the longitudinal direction Z, including a center point P of the spot-welding portion 50.

As shown in FIG. 2A, the spot-welding portion 50 is formed of a molten metal portion 51 and a heat-affected portion 53 formed adjacent to the outside of the molten metal portion 51.

Here, in the cross section perpendicular to the longitudinal direction Z including the center point P of the spot-welding portion 50, a region corresponding to the molten metal portion 51 is defined as a first region α, and a region corresponding to the heat-affected portion 53 is defined as a second region β.

Furthermore, a region formed of: a region from a melting boundary which is a boundary between the first region α and the second region β to a position 100 µm away from the boundary toward the first region α; and a region from the boundary to a position 100 µm away from the boundary toward the second region β is defined as a third region γ.

The third region γ overlaps a part of the first region α and a part of the second region β.

FIG. 2B is a graph showing the hardness distribution of the spot-welding portion 50. In this graph, the horizontal axis corresponds to the position of a virtual straight line a shown by the two-dot chain line in FIG. 2B, and the vertical axis corresponds to the Vickers hardness measured along the virtual straight line a.

The virtual straight line a extends from a center portion of the first region α to the second region β. More specifically, the virtual straight line a extends parallel to a joint surface (shown by the dashed line in FIG. 2A) between the first steel sheet member 10 and the second steel sheet member 20 with a distance of 200 µm therebetween from the joint surface toward the first steel sheet member 10.

A pair of points a2 are points at which the virtual straight line a intersects the melting boundary which is a boundary between the first region α and the second region β.

A pair of points a1 existing inside the pair of points a2 are points at which the virtual straight line a intersects the inner edge of the third region γ.

A pair of points a3 existing outside the pair of points a2 are points at which the virtual straight line a intersects the outer edge of the third region γ.

A pair of points a4 existing outside the pair of points a3 are points at which the virtual straight line a intersects the outer edge of the second region β.

Accordingly, in the virtual straight line a,
a line segment connecting the pair of points a2 corresponds to the first region α,
two line segments connecting the point a2 and the point a4 correspond to the second region β, and
two line segments connecting the point a1 and the point a3 correspond to the third region γ.

As shown in FIG. 2B, in the frame member 1 according to this embodiment, the hardness is reduced in a region (between the point a3 and the point a4) outside the second region β due to the existence of the HAZ-softened portion, but is not reduced in the third region γ.

Accordingly, average (arithmetic average) Vickers hardness Hv_{Ave} in the first region α and minimum Vickers hardness Hv_{Min} in the third region γ satisfy Hv_{Ave} - Hv_{Min} < 100.

In this case, spot fracture during deformation of the frame member 1, caused by a local decrease in hardness in the third region γ, is suppressed, and the closed cross section is maintained. Accordingly, the frame member 1 can exhibit excellent energy absorption performance that matches high-strengthening.

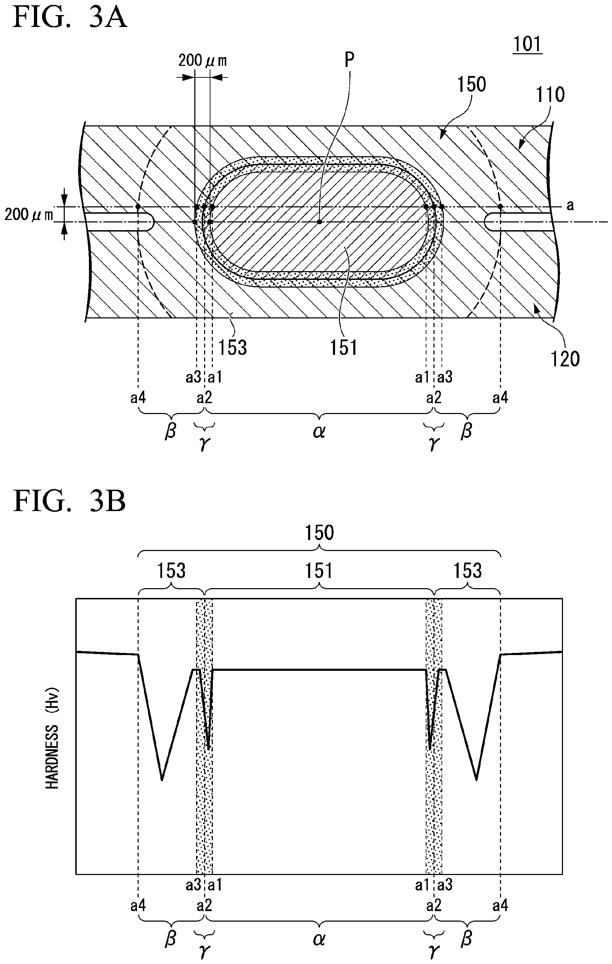

Here, FIG. 3A is a schematic view showing a cross section perpendicular to the longitudinal direction Z including a center point P of a spot-welding portion 150 of a frame member 101 using, instead of the first steel sheet member 10 and the second steel sheet member 20 of the frame member 1 according to the present embodiment, a first steel sheet member 110 having a Mn content of 1.27% by mass and a tensile strength of 1,900 MPa or more and a second steel sheet member 120 having a Mn content of 1.27% by mass and a tensile strength of 1,900 MPa or more. As shown in FIG. 3A, the spot-welding portion 150 includes a molten metal portion 151 and a heat-affected portion 153.

In addition, FIG. 3B is a graph showing the hardness distribution of the spot-welding portion 150. In this graph, as in FIG. 2B, the horizontal axis corresponds to the position of a virtual straight line a shown by the two-dot chain line in FIG. 3A, and the vertical axis corresponds to the Vickers hardness measured along the virtual straight line a.

As shown in FIG. 3B, in the frame member 101, separately from a HAZ-softened portion existing in a region (between a point a3 and a point a4) outside a second region β, a part where the hardness is rapidly reduced exists in a third region γ.

Accordingly, average Vickers hardness Hv_{Ave} in a first region α and minimum Vickers hardness Hv_{Min} in the third region γ show Hv_{Ave} - Hv_{Min} > 100.

According to the results of the studies by the inventors, this phenomenon is presumed to be due to a Mn-deficient layer formed in a case where a steel sheet having a high Mn content and a high strength is spot-welded.

In this frame member 101, since the softened portion exists in the third region γ, the closed cross section is not maintained due to spot fracture occurring during deformation, and excellent energy absorption performance that matches high-strengthening cannot be exhibited in some cases.

Meanwhile, according to the frame member 1 according to this embodiment, the average Vickers hardness Hv_{Ave} at a measurement position corresponding to the first region α in the virtual straight line a and the minimum Vickers hardness Hv_{Min} at a measurement position corresponding to the third region γ satisfy Hv_{Ave} - Hv_{Min} ≤ 100, and thus spot fracture during deformation, occurring by a local reduction in hardness, is suppressed, and the closed cross section is maintained. Accordingly, the frame member 1 can exhibit excellent energy absorption performance that matches high-strengthening.

In order to more securely prevent spot fracture during deformation, Hv_{Ave} - Hv_{Min} ≤ 50 is preferable, and Hv_{Ave} - Hv_{Min} ≤ 30 is more preferable.

As a measure for obtaining hardness distribution satisfying Hv_{Ave} - Hv_{Min} ≤ 100, for example, a steel sheet having a Mn content of 1.0% by mass or less, and preferably 0.50% by mass or less, is considered to be used as a material of the first steel sheet member 10. As above, in a case where the Mn content is reduced, it is possible to suppress the occurrence of Mn segregation in the third region γ, and thus it is possible to prevent the local formation of a softened portion in the third region γ. In addition, in a case where the amount of alloying elements other than Mn is adjusted, it is possible to prevent the local formation of a softened portion in the third region γ.

### (Measurement Method)

The average Vickers hardness Hv_{Ave} at a measurement position corresponding to the first region α in the virtual straight line a and the minimum Vickers hardness Hv_{Min} at a measurement position corresponding to the third region γ can be measured as described below.

The Vickers hardness is continuously measured at a measurement pitch of 15 µm along the virtual straight line a with a load of 10 gf according to JIS Z 2244.

From the Vickers hardness values obtained by such measurement, the average Vickers hardness Hv_{Ave} in the first region α and the minimum Vickers hardness Hv_{Min} in the third region γ can be obtained.

In the present application, a reduction in hardness in the narrow third region γ of about 200 µm is suppressed to avoid spot fracture. Accordingly, a measurement pitch of 15 µm, which is narrower than usual, is adopted.

In other words, in a case where the measurement pitch is too large, the reduction in hardness cannot be detected even in a case where the hardness is locally reduced in the vicinity of the third region γ.

Here, the method in which the measurement is performed along the virtual straight line a which extends parallel to the joint surface with a distance of 200 µm therebetween has been shown. However, in a case where the measurement by the above method is difficult, the measurement may be performed at a pitch of 15 µm from the center of the molten portion toward the outside across the melting boundary.

The chemical compositions of the first steel sheet member 10 and the second steel sheet member 20 are not particularly limited. However, in a case where the Mn content is excessive in each of the first steel sheet member 10 and the second steel sheet member 20, Mn segregation is likely to occur. Therefore, the Mn content is preferably 1.0% by mass or less, and more preferably 0.5% by mass or less.

For each of the first steel sheet member 10 and the second steel sheet member 20, the Mn content is preferably 0.1% by mass or more from the viewpoint of securing hardenability.

In addition, in a case where the Mn content is reduced, the C (carbon) content may be 0.30% to 0.60% by mass in order to secure strength.

Although the preferable embodiments of the present invention have been described in detail with reference to the accompanying drawings, the present invention is not limited to such examples. It is apparent that a person having common knowledge in the technical field to which the present invention belongs is able to devise various changes or modifications within the scope of the technical idea described in the claims, and it should be understood that such examples belong to the technical scope of the present invention as a matter of course.

For example, although the frame member 1 according to the embodiment is configured by using the first steel sheet member 10 and the second steel sheet member 20, the frame member 1 may be configured by using a plurality of three or more steel sheet members.

In addition, in the frame member 1 according to the embodiment, the first steel sheet member 10 has a hat-shaped cross-sectional shape and the second steel sheet member 20 has a cross-sectional shape of a flat sheet. However, any cross-sectional shape is adoptable as long as a closed cross section is formed. For example, the first steel sheet member 10 may have a flat sheet-like cross-sectional shape, and the second steel sheet member 20 may have a hat-shaped cross-sectional shape. Otherwise, both the first steel sheet member 10 and the second steel sheet member 20 may have a hat-shaped cross-sectional shape.

In addition, in the frame member 1 according to the embodiment, the pair of side walls 13, 13 have the same height, but may have different heights.

It is preferable that a cross-sectional region in which a ratio h1/w of a height h1 of the first steel sheet member 10 along the sheet thickness direction of a part where the spot-welding portion 50 is formed in the first steel sheet member 10 in the cross section perpendicular to the longitudinal direction Z of the frame member 1 to a width w of the frame member 1 along the direction perpendicular to the sheet thickness direction of the part where the spot-welding portion 50 is formed in the first steel sheet member 10 is 0.6 or less is formed.

According to such a configuration, in a case where a steel sheet in which the strength of the spot-welding portion 50 is increased is used to provide a member in which an aspect ratio of a cross section of the member is optimized, it is possible to suppress fracture of the spot-welding portion 50. This makes it possible to exhibit further excellent energy absorption performance.

In a case of a hat-shaped cross-sectional shape in which the pair of side walls 13 have different heights, an average of the heights of the side walls 13, 13 on both sides is defined as the height h1.

In the frame member 1 according to the present embodiment, since the second steel sheet member 20 has a flat sheet shape, a height h2 is 0 mm. In a case where the second steel sheet member 20 does not have a flat sheet shape, it is preferable that a cross-sectional region in which a ratio h2/w of the height h2 to a width w of the frame member 1 is 0.6 or less is formed.

The frame member 1 according to this embodiment has a uniform cross-sectional shape over the whole length, but may not have a uniform cross-sectional shape over the whole length.

The cross-sectional region in which the ratio h1/w is 0.6 or less preferably exists in 50% or more, and preferably 80% or more of the total length of the frame member 1 in the longitudinal direction Z.

In addition, similarly, the cross-sectional region in which the ratio h2/w is 0.6 or less preferably exists in 50% or more, and preferably 80% or more of the total length of the frame member 1 in the longitudinal direction Z.

According to such a configuration, it is possible to more securely suppress fracture from the spot-welding portion at the time of the collision, and it is possible to exhibit more excellent energy absorption performance.

### (Example)

The effects of one aspect of the present invention will be described in greater detail with examples. However, the conditions in the examples are merely an example adopted to confirm the feasibility and the effects of the present invention. The present invention is not limited to this example. In the present invention, various conditions can be adopted as long as the gist of the present invention is not deviated and the object of the present invention is achieved.

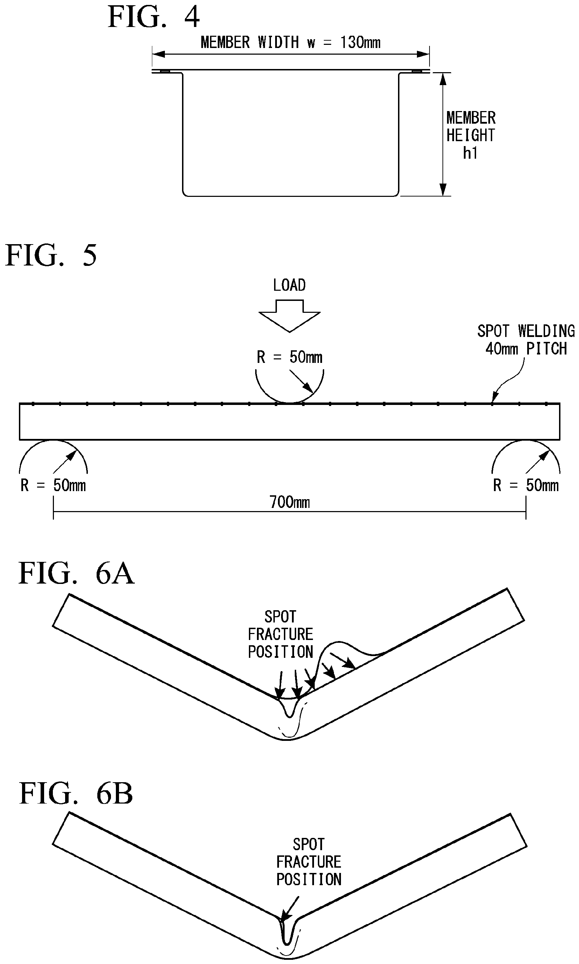

A three-point bending test shown in FIG. 5 was reproduced with a numerical analysis model, and the number of spot fractures was evaluated. A spot-welding portion was modeled with a nugget diameter of 6√t (t = 1.4 mm). As a strength of the spot-welding portion, a result of a shear type joint welding test was used. As material properties, a result of a tensile test was used.

First, steel sheets to be used in evaluation were specified as shown in Table 1.

**[Table 1]**

| Steel Sheet | Sheet Thickness | Mn Content | YP | TS | U.E1 |
|---|---|---|---|---|---|
| Steel Sheet A | 1.4 mm | 0.39% by mass | 1436 MPa | 2010 MPa | 5% |
| Steel Sheet B | 1.4 mm | 0.80% by mass | 1458 MPa | 2040 MPa | 5% |
| Steel Sheet C | 1.4 mm | 1.27% by mass | 1497 MPa | 2082 MPa | 5% |

In Experimental Examples 1 to 3 and 5 to 7, a frame member including: a hat-shaped steel sheet member consisting of a steel sheet A and having a predetermined member height h1; and a flat sheet-like steel sheet member (h2 = 0 mm) joined to a flange of the hat-shaped steel sheet member by spot welding and having equivalent characteristics to the steel sheet A was used. The pitch of the spot welding was 40 mm.

In Experimental Example 4, a frame member including: a hat-shaped steel sheet member consisting of a steel sheet B and having a predetermined member height h1; and a flat sheet-like steel sheet member (h2 = 0 mm) joined to a flange of the hat-shaped steel sheet member by spot welding and having equivalent characteristics to the steel sheet B was used. The pitch of the spot welding was 40 mm. In Experimental Examples 8 to 13, a frame member including: a hat-shaped steel sheet member consisting of a steel sheet C and having a predetermined member height h1; and a flat sheet-like steel sheet member (h2 = 0 mm) joined to a flange of the hat-shaped steel sheet member by spot welding and having equivalent characteristics to the steel sheet C was used. The pitch of the spot welding was 40 mm.

Accordingly, as shown in FIG. 4, frame members with a cross-sectional shape having a member width w of 130 mm and a member height h1 as shown in Table 2 below were obtained. A structure having a constant cross-sectional shape over the whole length with a frame member length of 800 mm was adopted.

Next, as shown in FIG. 5, on a pair of dies (R 50 mm) placed at an interval of 700 mm, the frame member was placed so that a midpoint between the dies and a center of the frame member in the longitudinal direction overlap in the height direction. After that, a rigid semicircular (R 50 mm) impactor was made to collide with the center of the frame member in the longitudinal direction at a constant speed of 7.2 km/hr, and the number of spot fractures was evaluated from the deformed state at that time.

FIG. 6A is an example of a case where the number of spot fractures is 10 (5 on one side). In this example, the back sheet is turned up due to the occurrence of spot fracture, and the closed cross section is not maintained.

FIG. 6B is an example of a case where the number of spot fractures is 2 (1 on one side). In this example, the back sheet enters the steel sheet member side due to the occurrence of spot fracture, but the closed cross section is maintained.

In the examples, a case where the number of spot fractures was 4 or less was determined to be acceptable. The evaluation results are shown in Table 2.

In a spot-welding portion obtained by performing spot welding on two overlapping steel sheets A, it was assumed that the Vickers hardness was measured at a pitch of 15 µm with a load of 10 gf according to JIS Z 2244 along a virtual straight line extending parallel to a joint surface between the steel sheet members with a distance of 200 µm therebetween from the joint surface toward the hat-shaped steel sheet member.

From the Vickers hardness values assumed as above, setting was conducted so that a difference (Hv_{Ave} - Hv_{Min}) between average Vickers hardness Hv_{Ave} in the first region α and minimum Vickers hardness Hv_{Min} in the third region γ was 45.

Similarly, the value of Hv_{Ave} - Hv_{Min} was adjusted to 90 in a spot-welding portion obtained by performing spot welding on two overlapping steel sheets B.

Similarly, the value of Hv_{Ave} - Hv_{Min} was adjusted to 140 in a spot-welding portion obtained by performing spot welding on two overlapping steel sheets C.

**[Table 2]**

| | Steel Sheet | Hv_{Ave} -Hv_{Min} | h1 | w | h1/w | Number of Fractures | Determination of Acceptance | Remarks |
|---|---|---|---|---|---|---|---|---|
| Experimental Example 1 | A | 45 | 20 mm | 130 mm | 0.15 | 2 | Very Good | Invention Example |
| Experimental Example 2 | A | 45 | 40 mm | 130 mm | 0.31 | 2 | Very Good | Invention Example |
| Experimental Example 3 | A | 45 | 60 mm | 130 mm | 0.46 | 2 | Very Good | Invention Example |
| Experimental Example 4 | B | 90 | 60 mm | 130 mm | 0.46 | 4 | Good | Invention Example |
| Experimental Example 5 | A | 45 | 80 mm | 130 mm | 0.62 | 4 | Good | Invention Example |
| Experimental Example 6 | A | 45 | 100 mm | 130 mm | 0.77 | 4 | Good | Invention Example |
| Experimental Example 7 | A | 45 | 120 mm | 130 mm | 0.92 | 4 | Good | Invention Example |
| Experimental Example 8 | C | 140 | 20 mm | 130 mm | 0.15 | 8 | NG | Comparative Example |
| Experimental Example 9 | C | 140 | 40 mm | 130 mm | 0.31 | 10 | NG | Comparative Example |
| Experimental Example 10 | C | 140 | 60 mm | 130 mm | 0.46 | 12 | NG | Comparative Example |
| Experimental Example 11 | C | 140 | 80 mm | 130 mm | 0.62 | 14 | NG | Comparative Example |
| Experimental Example 12 | C | 140 | 100 mm | 130 mm | 0.77 | 14 | NG | Comparative Example |
| Experimental Example 13 | C | 140 | 120 mm | 130 mm | 0.92 | 14 | NG | Comparative Example |

In Experimental Examples 1 to 3 and 5 to 7 assuming that the steel sheet A having a Mn content of 0.39% by mass was used, and Experimental Example 4 assuming that the steel sheet B having a Mn content of 0.80% by mass was used, no local reduction in hardness occurred, and the value of Hv_{Ave} - Hv_{Min} was 100 or less. Accordingly, it was possible to suppress the number of spot fractures during deformation to 4 or less.

On the other hand, in Experimental Examples 8 to 13 assuming that the steel sheet C having a Mn content of 1.27% by mass was used, the hardness was locally reduced, and the value of Hv_{Ave} - Hv_{Min} was more than 100. Accordingly, the number of spot fractures during deformation was 8 or more.

From the comparison between Experimental Examples 1 to 3 and 5 to 7 of the invention examples, it was also confirmed that the number of spot fractures can be suppressed as the value of h1/w is 0.6 or less.

### [Industrial Applicability]

According to the present invention, it is possible to provide a frame member capable of exhibiting excellent energy absorption performance that matches high-strengthening by suppressing fracture in a spot-welding portion at the time of the collision.

### [Brief Description of the Reference Symbols]

1 Frame member
10 First steel sheet member
11 Top sheet
13 Side wall
15 Flange
20 Second steel sheet member
50 Spot-welding portion
51 Molten metal portion
53 Heat-affected portion
α First region
β Second region
γ Third region

## Claims

1. A frame member obtained by joining a first steel sheet member and a second steel sheet member at a spot-welding portion by spot welding,
wherein a cross-sectional region in which a cross section perpendicular to a longitudinal direction of the frame member is a closed cross section is formed,
the first steel sheet member has a tensile strength of 1,900 MPa or more,
the spot-welding portion has a molten metal portion formed by the spot welding and a heat-affected portion adjacent to an outside of the molten metal portion, and
in a cross section perpendicular to the longitudinal direction including a center point of the molten metal portion,
in a case where a region corresponding to the molten metal portion is defined as a first region,
a region corresponding to the heat-affected portion is defined as a second region,
a region formed of a region from a boundary between the first region and the second region to a position 100 µm away from the boundary toward the first region and a region from the boundary to a position 100 µm away from the boundary toward the second region is defined as a third region, and
Vickers hardness is measured at a pitch of 15 µm with a load of 10 gf along a virtual straight line extending from a center portion of the first region to the second region,
average Vickers hardness Hv_{Ave} at a measurement position corresponding to the first region on the virtual straight line and minimum Vickers hardness Hv_{Min} at a measurement position corresponding to the third region on the virtual straight line satisfy Hv_{Ave} - Hv_{Min} ≤ 100.

2. The frame member according to Claim 1,
wherein a cross-sectional region in which a ratio h1/w of a height h1 of the first steel sheet member along a sheet thickness direction of a part where the spot-welding portion is formed in the first steel sheet member in the cross section perpendicular to the longitudinal direction of the frame member to a width w of the frame member along a direction perpendicular to the sheet thickness direction of the part where the spot-welding portion is formed in the first steel sheet member is 0.6 or less is formed.

3. The frame member according to Claim 2,
wherein the cross-sectional region in which the ratio h1/w is 0.6 or less exists in 50% or more of a total length of the frame member in the longitudinal direction.
